# EUROPEAN PATENT SPECIFICATION

(11) **EP 3 750 685 B1**
(45) Date of publication and mention of the grant of the patent: **28.09.2022**
(21) Application number: 20177207.6
(22) Date of filing: 28.05.2020
(51) Int. Cl.: B29C 51/04

(54) **PRE-STRETCHER WITH REDUCED EFFECTIVE HEAT CAPACITY**
VORSTRECKER MIT REDUZIERTER EFFEKTIVER WÄRMEKAPAZITÄT
PRÉ-ÉTIREUR À CAPACITÉ THERMIQUE EFFECTIVE RÉDUITE

(30) Priority: 14.06.2019 NL 2023318
(43) Date of publication of application: 16.12.2020
(73) Proprietor: B.V. Holdingmaatschappij B.S.M.F., 5161 WR Sprang-Capelle (NL)
(72) Inventor: Bosch, Antonie, 5161 WR Sprang-Capelle (NL)
(74) Representative: Arnold & Siedsma

(56) References cited:
- WO-A2-2016/161187
- DE-A1- 2 428 578
- JP-A- 2001 205 694
- US-A- 4 595 554
- US-A1- 2014 326 035

## Description

The present invention relates to a pre-stretcher for a thermoforming device. The present invention further relates to a thermoforming device comprising the pre-stretcher.

Thermoforming is a known technique. It relies on the fact that, with sufficient heating, the form of thermoplastic materials such as polypropylene (PP), polystyrene (PS), polyethylene (PET), or polylactic acid (PLA) can be changed. Hereinafter, the material to be formed using thermoforming will be referred to as polymeric material.

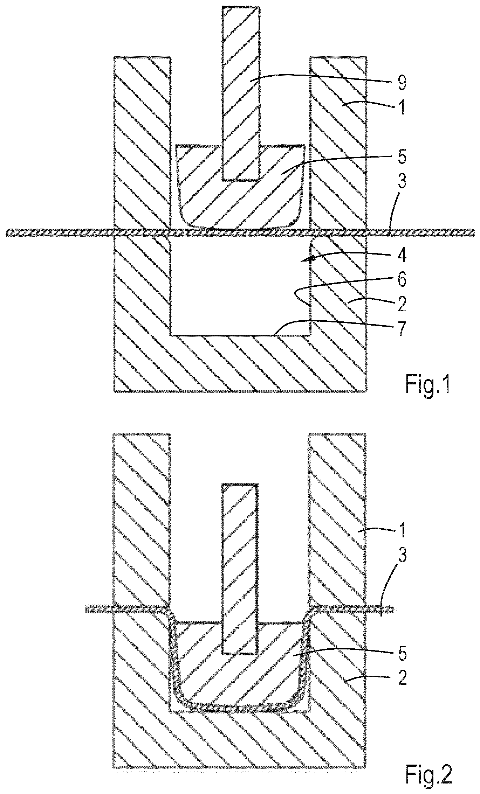

A typical thermoforming device, schematically shown in figure 1, comprises two molds, an upper mold 1 and a lower mold 2, in between which polymeric material 3, preferably in the form of a sheet or foil, can be arranged. Inside upper mold 1, a pre-stretcher is arranged 5 that can be moved relative to a remainder of upper mold 1. Pre-stretcher 5 typically has a conical shape, a box shape, a bar shape, or a trapezoidal prism shape, depending on the product to be formed.

When upper mold 1 and lower mold 2 are brought together, polymeric material 3 is pushed in mold cavities 4 of lower mold 2 by pre-stretcher 5 that moves in a first direction relative to polymeric material 3. This situation is shown in figure 2. An increased pressure is applied to press polymeric material 3 against wall 6 and bottom 7 of mold cavity 4. Because wall 6 and bottom 7 of mold cavity 4 are kept at relatively low temperatures, polymeric material 3 will solidify and the final shape of the product will be defined.

Pre-stretcher 5 comprises a coupling member with which pre-stretcher 5 can be coupled to a pre-stretcher rod 9, which in turn is mounted on a pre-stretcher plate that can be driven mechanically.

The combination of upper mold 1 and lower mold 2 usually comprises a plurality of mold cavities 4, and a corresponding plurality of pre-stretchers 5. A plurality of products can thereby be formed from one sheet or foil of polymeric material 3.

After the products, such as cups, have been formed, a separation step is performed to separate the products from a remainder of the polymeric material.

Typically, the known pre-stretcher comprises a substantially solid body. This body has a particular coefficient of thermal conductivity and a particular coefficient of friction relative to the polymeric material. These properties determine, in combination with the temperature of the polymeric material, the temperature of the pre-stretcher, and the speed at which the pre-stretcher moves, how the polymeric material is deformed when it is engaged by the pre-stretcher.

It is known that, in order to achieve acceptable product uniformity in terms of shape and/or size, it is important that the pre-stretcher and the polymeric material have attained relatively constant temperatures. However, the pre-stretcher is typically heated due to contact with the heated polymeric material. Therefore, when thermoforming products, a first quantity of products is discarded as during the manufacturing thereof, the pre-stretcher did not yet have the temperature it had during the manufacturing of a remainder of the products. Hence, when thermoforming products, initial waste is produced thereby increasing costs and time of manufacturing.

A pre-stretcher according to the preamble of claim 1 is known from US 4 595 554 A.

Further pre-stretchers are disclosed in JP2001205694A and DE2428578A1.

An object of the present invention is to provide a solution to the abovementioned problem.

According to the invention, this object is achieved by the pre-stretcher defined in claim 1 that is configured for pre-stretching a polymeric material by moving along a first direction relative to the polymeric material. The pre-stretcher of the invention comprises a body that includes a shell member that defines an outer surface of the pre-stretcher. The pre-stretcher is composed of one or more segments, each segment having associated therewith an axis parallel to the first direction.

Each segment comprises an inner member spaced apart from the shell member and at least one connecting member connecting the inner member to the shell member. The inner member of at least one segment comprises a coupling member for allowing the pre-stretcher to be coupled to a shaft or plate of the thermoforming device, and wherein the shell member surrounds the inner members of the one or more segments.

For each segment, the shell member, the inner member, and the at least one connecting member delimit an inner space filled with a gaseous medium within the pre-stretcher. At least one of the inner member(s), shell member, and connecting member(s) is/are made from syntactic foam, wherein the syntactic foam(s) of the inner member(s), shell member, and connecting member(s), is/are composed of hollow microspheres and a binding agent for binding the microspheres.

The present invention proposes to include an inner space in the pre-stretcher that is filled with a gaseous medium such as air. The pressure of the gaseous medium can be atmospheric. Alternatively, low to very low pressures may be used.

The gaseous medium provides a high thermal resistance to heat flowing from the shell member to the inner member. Consequently, when the shell member contacts the heated polymeric material, it will heat up more quickly to the desired temperature as less heat is transported away to the inner body. Furthermore, as the shell member can be relatively thin, it has a much lower heat capacity than the known pre-stretchers.

The at least one connecting member provides stability and rigidity to the pre-stretcher by connecting the shell member to the inner member.

A combined volume of the inner spaces of all segments can be larger than 35 percent of a total volume of the pre-stretcher, more preferably 50 percent, and even more preferably 65 percent.

The pre-stretcher may be composed of a single segment. In such embodiment, the abovementioned axis generally corresponds to a central axis of the pre-stretcher. Furthermore, such axis may correspond to an axis of symmetry. It should be noted that the axis refers to a mathematical line instead of a physical structure such as a rod or shaft.

Alternatively, the pre-stretcher can be composed of a plurality of segments, wherein the axis of each segment is spaced apart from the axis or axes of the other segment(s). For example, the pre-stretcher may be composed of two adjacent segments. The inner spaces of adjacent segments may be adjoined. Additionally or alternatively, the connecting members of adjacent segments can be integrally connected. However, the pre-stretcher may also comprise a separating wall that extends between opposing sides of the shell member. Such wall separates the inner spaces of adjacent segments. The separating wall may taper outwardly when approaching the shell member.

The inner member can be elongated and may extend along the axis. Additionally or alternatively, the at least one connecting member may comprise a first connecting member that extends along the axis and which connects the inner member to the shell member. Furthermore, the first connecting member may taper outwardly when approaching the shell member.

The tapering form of the first connecting member allows horizontal sections of the upper side of the pre-stretcher, i.e. perpendicular to the axis, to be supported by vertical structures, i.e. parallel to the axis. This is particularly important when the pre-stretcher is manufactured using 3D printing. With 3D printing, it is important that each layer that is printed is supported by an underlying layer that is either directly underneath the new layer or within a given angle. The later configuration allows for instance arc like structures to be printed.

Near or at the axis, the shell member may heat up less quickly as heat can be transported away to the inner member via the first connecting member. However, a small temperature difference between the regions near or at the axis and the edge regions of the pre-stretcher during the early stages, e.g. initial runs, of the thermoforming process may not be detrimental to the final product as the edges of the product are the most critical in terms of material thickness.

For each segment, the inner space may completely surround the inner member. Alternatively, at least one segment may comprise a plurality of plate members that each extend in a direction parallel to the axis and in a respective direction perpendicular to the axis. These plate members divide the inner space of the segment into a plurality of subspaces and connect the inner member to the shell member or to a separating wall.

The plate members provide additional rigidity to the pre-stretcher. The plate members may provide support in a direction perpendicular to the axis. The plate members can further be connected to the at least one connecting member. Additionally or alternatively, the plate members taper outwardly when approaching the shell member.

The at least one connecting member may comprise a bottom wall extending, for at least one segment, between the inner member and the shell member and closing the subspaces and/or the inner space. Preferably, the bottom wall extends between the inner member and the shell member for each segment. In this manner, the inner space(s) or subspaces may be completely sealed.

A thickness of the bottom wall may substantially equal a length along which the inner member extends along the axis. For example, the bottom wall may have a thickness that is larger than a length of the coupling member. Additionally or alternatively, the coupling member, the inner member and the bottom wall may be integrally formed.

The plate members and/or the separating wall may be connected to the bottom wall.

A volume of the shell part may be less than 40 percent of a total volume of the pre-stretcher, more preferably less than 30 percent, and even more preferably less than 20 percent.

The pre-stretcher may have a conical shape, a box shape, a bar shape, or a trapezoidal prism shape. Additionally or alternatively, the coupling member may comprise a threaded hole.

Preferably all of the inner member(s), shell member, connecting member(s), plate members, separating wall(s), and bottom wall are made from syntactic foam. For example, the inner member and the shell member of each segment can each made from the same syntactic foam. Additionally or alternatively, the connecting member(s) and/or the plate members of each segment and/or the separating wall(s) can be made from the same syntactic foam.

Preferably, the pre-stretcher has been manufactured using 3D printing. The Applicant has found that this manufacturing technique is particularly advantageous for realizing the pre-stretcher according to the invention in which an inner space is provided.

The binding agent of the syntactic foams(s) is one or more out of the group consisting of polyether ether ketone 'PEEK', polyether ketone ketone 'PEKK', polyaryle ether ketones 'PEK, polyetherimide 'PEI', and polyamide 'PA'. The hollow microspheres can for example be glass microspheres.

In an embodiment, at least two among the inner member(s) of the segment(s), the shell member, the connecting member(s) of the segment(s), the plate members of the segment(s), the bottom wall, and the separating wall(s) are made from different syntactic foams. This may be advantageous as the requirements for these parts can be different. For example, the thermal properties of the shell member are important for product definition whereas the inner member is to be connected to the thermoforming apparatus. The thermal properties of the inner member are less relevant for product definition. Hence, the present invention allows for the selection of different materials for different parts of the pre-stretcher.

According to a further aspect, the present invention provides a thermoforming device comprising the pre-stretcher as defined above.

Next, the invention will be described by referring to the appended drawings, wherein:
Figures 1 and 2 illustrate an example of a known thermoforming device;
Figure 3 illustrates a cross sectional view of a first embodiment of a pre-stretcher according to the invention;
Figure 4 illustrates a cross sectional view of a second embodiment of a pre-stretcher according to the invention; and
Figure 6 illustrates a cross sectional views of a fourth embodiment of a pre-stretcher according to the invention.

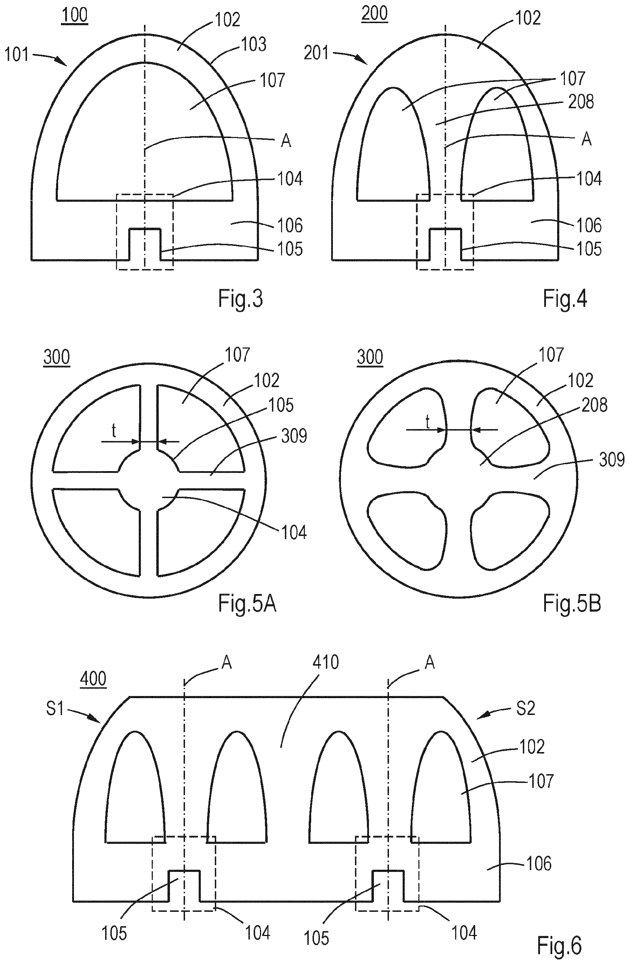

Figure 5A-5B illustrate a third embodiment of a pre-stretcher according to the invention.

Figure 3 illustrates a cross sectional view of a pre-stretcher 100 in accordance with the invention. It comprises a body 101, which in turn comprises a shell member 102 that defines an outer surface 103 of pre-stretcher 100.

Pre-stretcher 100 further comprises an inner member 104 spaced apart from shell member 102. Typically, inner member 104 is at least partially hollow with a threaded inner wall 105 to allow pre-stretcher 100 to be coupled to a thermoforming device, for example to a moveable shaft thereof such as rod 9 in figure 1.

Pre-stretcher 100 is symmetrical around axis A. Furthermore, pre-stretcher 100 comprises a connection member in the form of a bottom wall 106 that connects inner member 104 to shell member 102. Together, inner member 104, shell member 102, and bottom wall 106 define an inner space 107 which is filled with a gaseous medium, such as air.

Figure 4 illustrates a cross sectional view of a pre-stretcher 200 in accordance with the invention. It comprises a body 201 that is similar to body 101 of figure 3 except for the fact that body 201 comprises a further connecting member 208. This connecting member extends along axis A and tapers outwardly when approaching shell member 102. Furthermore, compared to inner space 107 in figure 3, inner space 107 in figure 4 is doughnut shaped.

The tapering of connecting member 208 allows pre-stretcher 200 to be manufactured more easily using 3D printing techniques. More in particular, it allows pre-stretcher 200 to have a wider top surface as most of the top surface is supported either by the vertical wall portions of shell member 102 or by the tapered section of connecting member 208.

The embodiment shown in figures 3 and 4 are all integrally formed using syntactic foam. For example, pre-stretchers 100, 200 could be formed using 3D printing of a syntactic foam composed of hollow microspheres, e.g. glass microspheres, and a binding agent for binding the microspheres. The binding agent can for example be one or more out of the group consisting of polyether ether ketone 'PEEK', polyether ketone ketone 'PEKK', polyaryle ether ketones 'PEK, polyetherimide 'PEI', and polyamide 'PA'.

Despite pre-stretchers 100, 200 being integrally formed using a single syntactic foam, the present invention does not exclude embodiments wherein multiple syntactic foams are used, also preferably being formed using 3D printing. Furthermore, in the figure 4 embodiment, bottom wall 106 may in some embodiments be omitted.

Figures 5A-5B illustrate two cross sectional views of a third embodiment of a pre-stretcher 300 according to the invention. The first cross section shown in figure 5A is at the bottom of pre-stretcher 300. As can be seen, pre-stretcher 300 does not comprise a bottom wall, although in other embodiments could be provided.

Compared to the embodiments shown in figure 4, pre-stretcher 300 comprises plate members 309 that extend between inner member 104 and shell member 102 and between connecting member 208 and shell member 102. At the bottom, plate members 309 are essentially flat having a normal vector that is oriented in the circumferential direction relative to axis A. Plate members 309 divide inner space 107 into a number of subspaces.

Plate members 309 taper outwardly when approaching shell member 102. This can be seen in figure 4 in which not only the tapering plate members 309 are shown but also the connecting member 208. It should be noted that embodiments are possible in which only one of the connecting member 208 and plate members 309 tapers outwardly. Furthermore, the tapering of the plate members may occur when the plate members 309 approach shell member 102 in a direction parallel to axis A and/or perpendicular to axis A. For example, a thickness t of plate members 309 may increase when approaching shell member 102 in a direction parallel to axis A. Furthermore, plate members 309 may taper outwardly when viewed along a left-right or top-bottom direction in figure 5B.

If the embodiments of figures 5A and 5B are provided with a bottom wall as the embodiments in figures 3 and 4, plate members 309 can be connected thereto. This would seal subspaces 107.In addition, although shown as integrally connected, the various parts of the embodiment in figures 5A and 5B can be made from different material, more in particular different syntactic foam.

The embodiments shown in figures 3-5 are composed of a single segment. Pre-stretcher 400 shown in cross section in figure 6 comprises two segments S1, S2. Here, each segment S1, S2 is configured as pre-stretcher 200 shown in figure 4, although one or both segments could also have been embodied as pre-stretcher 100 or 300 for example.

Segments S1, S2 are separated by a separating wall 410 that connects opposing sides of shell member 102. Separating wall 410 may taper outwardly when approaching shell member 102, similar to plate members 309. Furthermore, separating wall 410 may extend between bottom wall 106 and the top side of shell member 102.

At least one inner member 104 is at least partially hollow with a threaded inner wall 105 to allow pre-stretcher 400 to be coupled to a pre-stretcher rod. The other inner member may be solid.

Also with this embodiment, the various parts can be made of different types of syntactic foam.

In other embodiments, separating wall 410 or bottom wall 106 may be omitted. In the former case, inner space(s) or subspaces of segments S1, S2 may adjoin and/or connecting members 208 and/or plate members 309, when used, may be integrally connected.

The embodiments shown in figure 3-6 all comprise a substantial inner space or subspaces 107. This reduces the overall heat capacity of the pre-stretcher. Furthermore, shell member 102 can be made relatively thin, e.g. less than 20 percent of a total height of the pre-stretcher measured along the axis, more preferably less than 15 percent, and even more preferably less than 10 percent. This thickness could be computed at a side wall of the pre-stretcher at a position where the side wall does not connected to a connecting member.

Typically, the material of a pre-stretcher has a relatively low thermal conductivity such that the temperature of the pre-stretcher does not change considerably when it engages the polymeric material. Due to this property, the time required during manufacturing to reach a stable pre-stretcher temperature can be considerable. This results in product loss and manufacturing inefficiency.

However, using a thin shell member 102 in combination with a restricted heat flow between shell member 102 and inner member 104 and/or bottom wall 106, results in shell member 102 heating up relatively quickly due to the heated polymeric foil. Consequently, the most important product defining part of the pre-stretcher, i.e. shell member 102, will achieve the desired operational temperature more quickly and less material is wasted during the initial stages of manufacturing.

Although the embodiments discussed above either comprise a fluid channel or different materials, the present invention does not exclude embodiments in which both are used. Moreover, although the present invention has been described using detailed embodiments thereof, the scope of the invention should not be limited to these embodiments. Instead, the scope of the invention is defined by the appended claims and their equivalents.

## Claims

1. A pre-stretcher (100) for a thermoforming device and configured for pre-stretching a polymeric material by moving along a first direction relative to the polymeric material, the pre-stretcher comprising body (101) that includes a shell member (102) that defines an outer surface (103) of the pre-stretcher, the pre-stretcher being composed of one or more segments (S1, S2), each segment having associated therewith an axis (A, A1, A2) parallel to the first direction and each segment comprising:
an inner member (104, 104') spaced apart from the shell member; and
at least one connecting member (106, 206) connecting the inner member to the shell member;
wherein the inner member of at least one segment comprises a coupling member (107, 107') for allowing the pre-stretcher to be coupled to a shaft or plate of the thermoforming device, and wherein the shell member surrounds the inner members of the one or more segments;
wherein, for each segment, the shell member, the inner member, and the at least one connecting member delimit an inner space filled with a gaseous medium within the pre-stretcher;
**characterized in that** at least one of the inner member(s), shell member, and connecting member(s) is/are made from syntactic foam, wherein the syntactic foam(s) of the inner member(s), shell member, and connecting member(s), is/are composed of hollow microspheres and a binding agent for binding the microspheres.

2. The pre-stretcher according to claim 1, wherein each of the inner member(s), shell member, and connecting member(s) is/are made from syntactic foam.

3. The pre-stretcher according to claim 1 or 2, wherein a combined volume of the inner spaces of all segments is larger than 35 percent of a total volume of the pre-stretcher, more preferably 50 percent, and even more preferably 65 percent.

4. The pre-stretcher according to claim 1, 2, or 3, wherein the pre-stretcher is composed of a single segment, wherein the axis preferably coincides with a symmetry axis of the pre-stretcher.

5. The pre-stretcher according to claim 1, 2, or 3, wherein the pre-stretcher is composed of a plurality of segments, wherein the axis of each segment is spaced apart from the axes of the other segment(s).

6. The pre-stretcher according to claim 5, wherein the inner spaces of adjacent segments are adjoined and/or wherein the connecting members of adjacent segments are integrally connected; or
the pre-stretcher further comprising a separating wall extending between opposing sides of the shell member, said separating wall separating the inner spaces of adjacent segments, wherein the separating wall tapers preferably outwardly when approaching the shell member.

7. The pre-stretcher according to any of the previous claims, wherein the inner member is elongated and extends along the axis.

8. The pre-stretcher according to any of the previous claims, wherein the at least one connecting member comprises a first connecting member that extends along the axis and which connects the inner member to the shell member, wherein the first connecting member preferably tapers outwardly when approaching the shell member.

9. The pre-stretcher according to any of the previous claims, wherein for each segment, the inner space completely surrounds the inner member.

10. The pre-stretcher according to any of the claims 1-8, wherein at least one segment comprises a plurality of plate members that each extend in a direction parallel to the axis and in a respective direction perpendicular to the axis, said plate members dividing the inner space of the segment into a plurality of subspaces and connecting the inner member to the shell member or to a separating wall;
wherein the plate members are preferably further connected to the at least one connecting member, and/or wherein the plate members preferably taper outwardly when approaching the shell member.

11. The pre-stretcher according to any of the previous claims, wherein the at least one connecting member comprises a bottom wall extending, for at least one segment, between the inner member and the shell member and closing the subspaces and/or the inner space, wherein a thickness of the bottom wall preferably substantially equals a length along which the inner member extends along the axis, and/or, in so far as depending on claim 6 and/or claim 10, wherein the plate members and/or the separating wall are preferably connected to the bottom wall.

12. The pre-stretcher according to any of the previous claims, wherein a volume of the shell member is less than 40 percent of a total volume of the pre-stretcher, more preferably less than 30 percent, and even more preferably less than 20 percent.

13. The pre-stretcher according to any of the previous claims, wherein the pre-stretcher has a conical shape, a box shape, a bar shape, or a trapezoidal prism shape, and/or wherein the coupling member comprises a threaded hole.

14. The pre-stretcher according to any of the previous claims, wherein preferably all of the inner member(s), shell member, connecting member(s), plate members, separating wall(s), and bottom wall are made from syntactic foam;
wherein the inner member and the shell member of each segment are preferably each made from the same syntactic foam; and/or
wherein the connecting member(s) and/or the plate members of each segment and/or the separating wall(s) is/are preferably made from the same syntactic foam; and/or
wherein the pre-stretcher has preferably been manufactured using 3D printing;
wherein the binding agent of the syntactic foams(s) is one or more out of the group consisting of polyether ether ketone 'PEEK', polyether ketone ketone 'PEKK', polyaryle ether ketones 'PEK, polyetherimide 'PEI', and polyamide 'PA', wherein preferably at least two among the inner member(s) of the segment(s), the shell member, the connecting member(s) of the segment(s), the plate members of the segment(s), the bottom wall, and the separating wall(s) are made from different syntactic foams.

15. A thermoforming device comprising the pre-stretcher of any of the previous claims.

## Patentansprüche

1. Vorstrecker (100) für eine Tiefziehvorrichtung und zum Vorstrecken eines Polymermaterials, indem er sich in einer ersten Richtung bezüglich des Polymermaterials bewegt, wobei der Vorstrecker einen Körper (101) aufweist, der ein Gehäuseelement (102) enthält, welches eine Außenfläche (103) des Vorstreckers definiert, wobei der Vorstrecker aus einem oder mehr Segmenten (S1, S2) zusammengesetzt ist, wobei jedem Segment eine Achse (A, A1, A2) parallel zur ersten Richtung zugeordnet ist und jedes Segment Folgendes aufweist:
ein von dem Gehäuseelement beabstandetes Innenteil (104, 104'); sowie
mindestens ein Verbindungselement (106, 206), welches das Innenteil mit dem Gehäuseelement verbindet;
wobei das Innenteil mindestens eines Segments ein Kopplungselement (107, 107') aufweist, wodurch der Vorstrecker mit einer Welle oder Platte der Tiefziehvorrichtung gekoppelt werden kann, und wobei das Gehäuseelement die Innenteile des einen oder der mehreren Segmente umgibt;
wobei das Gehäuseelement, das Innenteil und das mindestens eine Verbindungselement bei jedem Segment einen mit einem gasförmigen Medium gefüllten Innenraum in dem Vorstrecker begrenzen;
**dadurch gekennzeichnet, dass** mindestens eines des Innenteils/der Innenteile, des Gehäuseelements und des Verbindungselements/der Verbindungselemente aus syntaktischem Schaum besteht, wobei der syntaktische Schaum/die syntaktischen Schäume des Innenteils/der Innenteile, des Gehäuseelements und des Verbindungsteils/der Verbindungsteile aus hohlen Mikrokügelchen und einem Bindemittel zum Binden der Mikrokügelchen zusammengesetzt ist/sind.

2. Vorstrecker nach Anspruch 1, wobei das/die Innenteil(e), das Gehäuseelement und das/die Verbindungsteil(e) jeweils aus syntaktischem Schaum hergestellt sind.

3. Vorstrecker nach Anspruch 1 oder 2, wobei ein kombiniertes Volumen der Innenräume aller Segmente größer als 35 Prozent, weiter bevorzugt 50 Prozent und noch weiter bevorzugt 65 Prozent, eines Gesamtvolumens des Vorstreckers ist.

4. Vorstrecker nach Anspruch 1, 2 oder 3, wobei der Vorstrecker aus einem einzigen Segment zusammengesetzt ist, wobei die Achse vorzugsweise mit einer Symmetrieachse des Vorstreckers zusammenfällt.

5. Vorstrecker nach Anspruch 1, 2 oder 3, wobei der Vorstrecker aus einer Mehrzahl von Segmenten zusammengesetzt ist, wobei die Achse jedes Segments von den Achsen des anderen Segments/der anderen Segmente beabstandet ist.

6. Vorstrecker nach Anspruch 5, wobei die Innenräume benachbarter Segmente aneinander angrenzen und/oder wobei die Verbindungselemente benachbarter Segmente einstückig verbunden sind; oder
wobei der Vorstrecker weiterhin eine Trennwand aufweist, die sich zwischen gegenüberliegenden Seiten des Gehäuseelements erstreckt, wobei die Trennwand die Innenräume benachbarter Segmente trennt, wobei sich die Trennwand bei Annäherung an das Gehäuseelement vorzugsweise nach außen verjüngt.

7. Vorstrecker nach einem der vorhergehenden Ansprüche, wobei das Innenteil langgestreckt ist und entlang der Achse verläuft.

8. Vorstrecker nach einem der vorhergehenden Ansprüche, wobei das mindestens eine Verbindungselement ein erstes Verbindungselement aufweist, das entlang der Achse verläuft und welches das Innenteil mit dem Gehäuseelement verbindet, wobei sich das erste Verbindungselement bei Annäherung an das Gehäuseelement vorzugsweise nach außen verjüngt.

9. Vorstrecker nach einem der vorhergehenden Ansprüche, wobei der Innenraum bei jedem Segment das Innenteil vollständig umgibt.

10. Vorstrecker nach einem der Ansprüche 1 bis 8, wobei mindestens ein Segment eine Mehrzahl von Plattenelementen aufweist, die sich jeweils in eine Richtung parallel zur Achse sowie in eine entsprechende Richtung senkrecht zur Achse erstrecken, wobei die Plattenelemente den Innenraum des Segments in eine Mehrzahl von Teilräumen unterteilen und das Innenteil mit dem Gehäuseelement oder mit einer Trennwand verbinden;
wobei die Plattenelemente vorzugsweise weiterhin mit dem mindestens einen Verbindungselement verbunden sind, und/oder wobei sich die Plattenelemente bei Annäherung an das Gehäuseelement vorzugsweise nach außen verjüngen.

11. Vorstrecker nach einem der vorhergehenden Ansprüche, wobei das mindestens eine Verbindungselement eine Bodenwand aufweist, die sich bei mindestens einem Segment zwischen dem Innenteil und dem Gehäuseelement erstreckt und die Teilräume und/oder den Innenraum verschließt, wobei eine Dicke der Bodenwand vorzugsweise im Wesentlichen einer Länge entspricht, entlang der das Innenteil entlang der Achse verläuft, und/oder, bei Abhängigkeit von Anspruch 6 und/oder Anspruch 10, wobei die Plattenelemente und/oder die Trennwand vorzugsweise mit der Bodenwand verbunden sind.

12. Vorstrecker nach einem der vorhergehenden Ansprüche, wobei ein Volumen des Gehäuseelements weniger als 40 Prozent, weiter bevorzugt weniger als 30 Prozent und weiter bevorzugt weniger als 20 Prozent, eines Gesamtvolumens des Vorstreckers beträgt.

13. Vorstrecker nach einem der vorhergehenden Ansprüche, wobei der Vorstrecker eine konische Form, eine Kastenform, eine Stabform oder eine Trapezprismaform aufweist, und/oder wobei das Kopplungsteil eine Gewindeöffnung aufweist.

14. Vorstrecker nach einem der vorhergehenden Ansprüche, wobei vorzugsweise das/die Innenteil(e), das Gehäuseelement, das/die Verbindungselement(e), die Plattenelemente, die Trennwand/Trennwände sowie die Bodenwand insgesamt aus syntaktischem Schaum hergestellt sind;
wobei das Innenteil und das Gehäuseelement jedes Segments vorzugsweise jeweils aus demselben syntaktischen Schaum hergestellt sind; und/oder
wobei das/die Verbindungselement(e) und/oder die Plattenteile jedes Segments und/oder die Trennwand/Trennwände vorzugsweise aus demselben syntaktischen Schaum hergestellt sind; und/oder
wobei der Vorstrecker vorzugsweise mithilfe von 3D-Druck hergestellt worden ist;
wobei das Bindemittel des/der syntaktischen Schaums/Schäume eines oder mehrere aus der Gruppe bestehend aus Polyetheretherketon ,PEEK', Polyetherketonketon ,PEKK', Polyaryletherketonen ,PEK', Polyetherimid ,PEI' und Polyamid ,PA' ist, wobei vorzugsweise mindestens zwei aus dem/den Innenteil(en) des Segments/der Segmente, dem Gehäuseelement, dem/den Verbindungselement(en) des Segments/der Segmente, den Plattenelementen des Segments/der Segmente, der Bodenwand sowie der Trennwand/den Trennwänden aus unterschiedlichen syntaktischen Schäumen hergestellt sind.

15. Tiefziehvorrichtung mit dem Vorstrecker nach einem der vorhergehenden Ansprüche.

## Revendications

1. Dispositif de pré-étirage (100) destiné à un dispositif de thermoformage et configuré de manière à pré-étirer un matériau polymère par déplacement suivant une première direction par rapport au matériau polymère, le dispositif de pré-étirage comprenant un corps (101) qui comporte un élément d'enveloppe (102) qui définit une surface externe (103) du dispositif de pré-étirage, le dispositif de pré-étirage étant composé d'un ou plusieurs segments (S1, S2), chaque segment étant associé à un axe (A, A1, A2) parallèle à la première direction et chaque de segment comprenant :
un élément interne (104, 104') espacé par rapport à l'élément d'enveloppe ; et
au moins un élément de liaison (106, 206) reliant l'élément interne à l'élément d'enveloppe ;
dans lequel l'élément interne d'au moins un segment comprend un élément de couplage (107, 107') destiné à permettre le couplage du dispositif de pré-étirage à un arbre ou à une plaque du dispositif de thermoformage, et dans lequel l'élément d'enveloppe entoure les éléments internes du ou des segments ;
dans lequel, pour chaque segment, l'élément d'enveloppe, l'élément interne et le au moins un élément de liaison délimitent un espace interne rempli d'un milieu gazeux à l'intérieur du dispositif de pré-étirage ;
**caractérisé en ce que** au moins l'un des éléments internes, de l'élément d'enveloppe et de ou des éléments de liaison est réalisé à base de mousse syntactique, dans lequel les mousses syntactiques des éléments internes, de l'élément d'enveloppe, et de ou des éléments de liaison, sont composées de micro-sphères creuses et d'un agent de liaison destiné à lier les micro-sphères.

2. Dispositif de pré-étirage selon la revendication 1, dans lequel chacun des éléments internes, de l'élément d'enveloppe, et des éléments de liaison est réalisé à base de mousse syntactique.

3. Dispositif de pré-étirage selon la revendication 1 ou 2, dans lequel un volume cumulé des espaces internes de l'ensemble des segments est supérieur à 35 pour-cent d'un volume total du dispositif de pré-étirage, plus préférablement, à 50 pour-cent, et encore plus préférablement, à 65 pour-cent.

4. Dispositif de pré-étirage selon la revendication 1, 2, ou 3, dans lequel le dispositif de pré-étirage est composé d'un segment simple, dans lequel l'axe coïncide de préférence avec un axe de symétrie du dispositif de pré-étirage.

5. Dispositif de pré-étirage selon la revendication 1, 2, ou 3, dans lequel le dispositif de pré-étirage est composé d'une pluralité de segments, dans lequel l'axe de chaque segment est espacé par rapport aux axes des autres segments.

6. Dispositif de pré-étirage selon la revendication 5, dans lequel les espaces internes des segments adjacents sont associés et/ou dans lequel les éléments de liaison des segments adjacents sont couplés de manière unitaire ; ou
le dispositif de pré-étirage comprenant, en outre, une paroi de séparation s'étendant entre des côtés opposés de l'élément d'enveloppe, ladite paroi de séparation séparant les espaces internes de segments adjacents, dans lequel la paroi de séparation est évasée, de préférence, vers l'extérieur en se rapprochant de l'élément d'enveloppe.

7. Dispositif de pré-étirage selon l'une quelconque des revendications précédentes, dans lequel l'élément interne est allongé et s'étend le long de l'axe.

8. Dispositif de pré-étirage selon l'une quelconque des revendications précédentes, dans lequel le au moins un élément de liaison comprend un premier élément de liaison qui s'étend le long de l'axe et qui relie l'élément interne à l'élément d'enveloppe, dans lequel le premier élément de liaison est, de préférence, évasé vers l'extérieur en se rapprochant de l'élément d'enveloppe.

9. Dispositif de pré-étirage selon l'une quelconque des revendications précédentes, dans lequel, pour chaque segment, l'espace interne entoure entièrement l'élément interne.

10. Dispositif de pré-étirage selon l'une quelconque des revendications 1 à 8, dans lequel le au moins un segment comprend une pluralité d'éléments plats qui s'étendent chacun dans une direction parallèle à l'axe et dans une direction perpendiculaire à l'axe respective, lesdits éléments plats divisant l'espace interne du segment en une pluralité d'espaces secondaires et reliant l'élément interne à l'élément d'enveloppe ou à une paroi de séparation ;
dans lequel les éléments plats sont, en outre, de préférence, reliés au au moins un élément de liaison, et/ou dans lequel les éléments plats sont, de préférence, évasés vers l'extérieur en se rapprochant de l'élément d'enveloppe.

11. Dispositif de pré-étirage selon l'une quelconque des revendications précédentes, dans lequel le au moins un élément de liaison comprend une paroi inférieure s'étendant, pour au moins un segment, entre l'élément interne et l'élément d'enveloppe et fermant les espaces secondaires et/ou l'espace interne, dans lequel une épaisseur de la paroi inférieure est, de préférence, sensiblement égale à une longueur le long de laquelle l'élément interne s'étend le long de l'axe, et/ou, dans la mesure où il dépend de la revendication 6 et/ou 10, dans lequel les éléments plats et/ou la paroi de séparation sont de préférence reliés à la paroi inférieure.

12. Dispositif de pré-étirage selon l'une quelconque des revendications précédentes, dans lequel un volume de l'élément d'enveloppe est inférieur à 40 pour-cent d'un volume total du dispositif de pré-étirage, plus préférablement, inférieur à 30 pour-cent et encore plus préférablement, inférieur à 20 pour-cent.

13. Dispositif de pré-étirage selon l'une quelconque des revendications précédentes, dans lequel le dispositif de pré-étirage présente une forme conique, une forme de boîte, une forme de barre ou une forme de prisme trapézoïdal, et/ou dans lequel l'élément de couplage comprend un orifice fileté.

14. Dispositif de pré-étirage selon l'une quelconque des revendications précédentes, dans lequel, de préférence, tous les éléments internes, l'élément d'enveloppe, les éléments de liaison, les éléments plats, les parois de séparation et la paroi inférieure sont réalisés à base de mousse syntactique ;
dans lequel l'élément interne et l'élément d'enveloppe de chaque segment sont, de préférence, réalisés chacun à base de la même mousse syntactique ; et/ou
dans lequel les éléments de liaison et/ou les éléments plats de chaque segment et/ou les parois de séparation sont, de préférence, réalisés à base de la même mousse syntactique ; et/ou
dans lequel le dispositif de pré-étirage est, de préférence, réalisé en utilisant l'impression 3D ;
dans lequel l'agent de liaison des mousses syntactiques est un ou plusieurs parmi le groupe constitué par du polyéther éther cétone "PEEK", du polyéther cétone cétone "PEKK", des polyaryle éther cétones "PEK", du polyétherimide "PEI" et du polyamide "PA", dans lequel, de préférence, au moins deux parmi les éléments internes des segments, l'élément d'enveloppe, les éléments de liaison des segments, les éléments plats des segments, la paroi inférieure et les parois de séparation sont réalisés à base de différents mousses syntactiques.

15. Dispositif de thermoformage comprenant le pré-tendeur selon l'une quelconque des revendications précédentes.
